# FASCICULE DE BREVET EUROPEEN

(11) **EP 0 485 250 B1**
(45) Date de publication et mention de la délivrance du brevet: **01.05.1996**
(21) Numéro de dépôt: 91402777.6
(22) Date de dépôt: 18.10.1991
(51) Int. Cl.: G06F 3/147

(54) **Dispositif d'affichage électronique de données**
Elektronische Datenanzeigevorrichtung
Electronic data display device

(30) Priorité: 07.11.1990 FR 9013776
(43) Date de publication de la demande: 13.05.1992
(73) Titulaire: RASEC COMMUNICATION, F-41200 Romorantin-Lanthenay (FR)
(72) Inventeur: Joliey, Bernard, F-59170 Croix (FR)
(74) Mandataire: Laget, Jean-Loup

(56) Documents cités:
- WO-A-83/00251
- US-A- 3 693 155
- MESURES vol.52, no.13,19 Octobre 1987, PARIS (FR) pages 71-74; "Transmissions par courant porteur: à hauts débits aussi ?"

## Description

La présente invention concerne un dispositif d'affichage électronique de données.

Ces dispositifs font actuellement l'objet de recherches intenses car ils doivent permettre l'affichage d'informations diverses concernant des produits, par exemple ceux mis en vente dans un magasin à grande surface, de manière simple, à partir d'un poste central de commande.

A l'heure actuelle, la plupart des magasins affichent les informations concernant la nature, le poids, le prix etc... des produits sur des supports ou étiquettes en papier ou en matière plastique placés sur les rayonnages près de chaque produit.

Lorsque l'une des informations doit être modifiée, il est nécessaire qu'une personne se déplace dans les rayons pour effectuer les corrections demandées.

Les dispositifs d'affichage électronique de données recherchés ont pour objectif de remplacer les étiquettes en papier par des modules d'affichage dont le pilotage est assuré à partir d'un poste de commande comportant un ordinateur.

Grâce à de tels dispositifs, comme tous les modules reçoivent les informations à partir de l'ordinateur central, il est aisé de modifier les données affichées par une commande appropriée et unique de l'ordinateur.

On peut alors réduire considérablement à la fois le temps nécessaire pour afficher de nouvelles données et les risques d'erreurs toujours possibles lorsque des informations doivent être transmises entre plusieurs personnes au cours de leur traitement.

Certains dispositifs actuellement proposés nécessitent autant de câbles de transmission entre l'ordinateur et les modules d'affichage et autant de câbles d'alimentation qu'il y a de modules d'affichage, ce qui rend leur installation complexe à réaliser et donc sujette à des défauts de fonctionnement.

D'autres dispositifs sont plus simples à installer puisqu'ils ne nécessitent que trois conducteurs, pour la masse, pour l'alimentation électrique et pour la transmission des données, auxquels sont reliés en parallèle tous les modules d'affichage. Toutefois ces dispositifs nécessitent l'installation d'une interface secondaire en liaison avec chaque module d'affichage pour assurer la conversion des données et le retour des informations permettant de vérifier le bon accomplissement de l'ordre donné à partir de l'ordinateur central.

Enfin, le document WO 83/00251 divulgue un dispositif d'affichage électronique des prix dans les magasins comportant un ordinateur basé dans chaque magasin (ces ordinateurs locaux pouvant être pilotés à distance par un ordinateur central), relié à une pluralité d'étiquettes d'affichage électronique par une liaison à deux fils alimentée en très basse tension.

L'invention tend à proposer un dispositif qui soit d'installation et d'utilisation rapides, aisées et fiables même si le nombre d'étiquettes d'affichage est très important.

A cet effet, l'objet de l'invention est un dispositif d'affichage électronique de données comportant un ordinateur, une interface primaire, des interfaces secondaires commandant chacune au moins une étiquette d'affichage électronique, et où :
- l'interface primaire, recevant les données de l'ordinateur, est reliée à toutes les interfaces secondaires par une seule ligne à deux fils véhiculant un courant alternatif d'alimentation sous basse tension, et des informations de commande et de contrôle sous forme d'impulsions,
- chaque interface secondaire est reliée à toutes ses étiquettes par une seule ligne à deux fils véhiculant un courant alternatif d'alimentation sous très basse tension, et des informations de commande et de contrôle sous forme d'impulsions,
- toutes les informations sont transmises en utilisant le principe des courants porteurs.

Ce dispositif est encore remarquable en ce que :
- la basse tension utilisée dans la ligne reliant l'interface primaire aux interfaces secondaires est de 220 volts.
- la très basse tension utilisée dans les lignes reliant chaque interface secondaire à ses étiquettes est de 12 Volts.

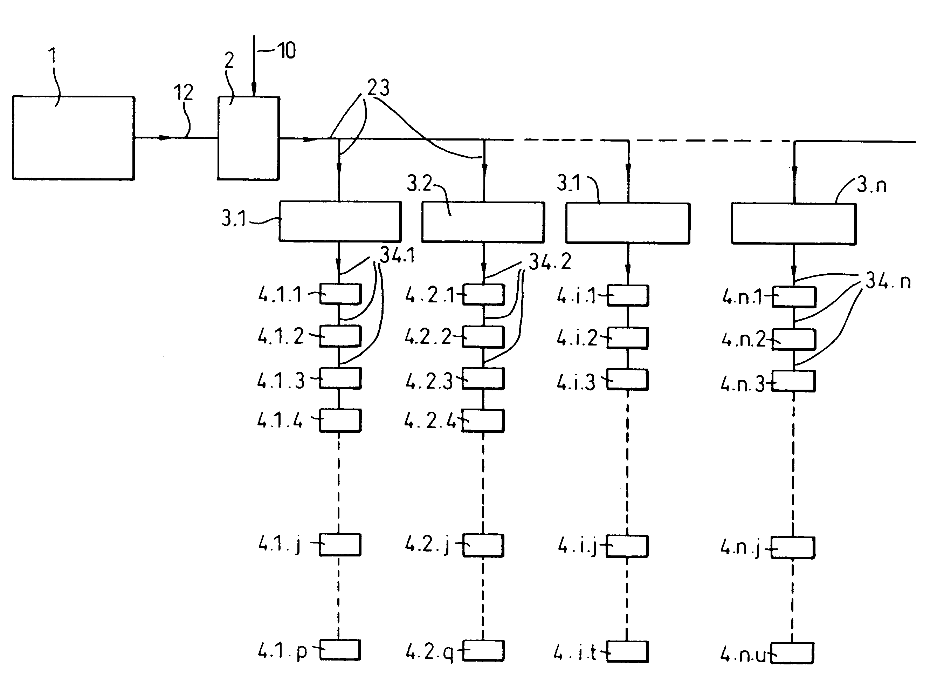

Le dispositif selon l'invention sera mieux compris par la description qui va suivre en référence au dessin unique ci-joint.

Sur ce dessin, on a représenté schématiquement le dispositif d'affichage électronique selon l'invention, et l'on voit en 1 l'ordinateur central à partir duquel sont commandés tous les modules d'affichage 4.

L'ordinateur 1 est alimenté de manière connue en soi.

L'ordinateur pourra bien entendu être de tout type et capacité convenable, par exemple un micro-ordinateur.

Cet ordinateur 1 transmet par une ligne 12 les données à une interface primaire 2, alimentée en courant alternatif à 220 V par une ligne 10.

L'interface primaire 2, à son tour transmet ces données par une ligne primaire unique 23 à des interfaces secondaires 3.1, 3.2,...3.i, ...3.n toutes reliées en parallèle à cette ligne 23.

Chacune de ces interfaces secondaires 3 est reliée par une ligne secondaire 34 à des modules 4.

Sur le dessin, on a donné la référence générale 3 aux interfaces secondaires, suivie d'un indice 1, 2, ... i, ...., n déterminant leur position le long de la ligne 23. De même, on a donné aux modules ou étiquettes d'affichage électronique la référence générale 4, suivie de l'indice de l'interface secondaire dont il dépendent et de l'indice déterminant leur position sur la ligne 34 sortant de l'interface secondaire.

De la même manière, chaque ligne secondaire 34 sortant d'une interface secondaire 3 porte l'indice de position de ladite interface.

Comme on a pu ainsi le voir sur le dessin, chaque interface secondaire 3 pilote plusieurs modules ou étiquettes 4. Bien entendu, le nombre de modules 4 lié à chaque interface secondaire 3 peut varier de l'une à l'autre et c'est pourquoi l'on a choisi des indices p, q, t, u différents pour les dernier modules 4 de chaque ligne 34.

De manière pratique, dans un magasin à grande surface on peut disposer une interface secondaire 3 en tête de chaque gondole de présentation des produits mis en vente, et relier à celle-ci toutes les étiquettes nécessaires au marquage des produits présents sur cette gondole.

Suivant l'invention, les lignes 34 et la ligne 23 sont toutes des lignes usuelles à deux conducteurs véhiculant du courant alternatif.

Les lignes 23 et 34 véhiculent en même temps les informations de l'ordinateur 1 vers les étiquettes 4 pour leur commande et en sens inverse pour le contrôle des opérations d'affichage.

La ligne 23 est alimentée en courant alternatif à basse tension, par exemple, de manière simple puisque c'est la tension habituelle, en 220 V.

Les lignes 34 sont, quant à elles, alimentées en courant alternatif à très basse tension, par exemple 12 V ce qui permet de ne pas avoir de passages de courant pouvant être dangereux au niveau des présentoirs accessibles au public.

Les informations sont émises en code binaire par l'ordinateur 1 dans la ligne 12 jusqu'à l'interface primaire 2 dans laquelle ces informations sont envoyées dans la ligne 23 sous forme d'impulsions transmises suivant le principe des courants porteurs.

Chaque interface secondaire 3 démodule les informations qu'elle reçoit de la ligne 23 afin de les interpréter et de les garder en mémoire si elle lui sont destinées. Dans chaque interface secondaire 3, les informations qui la concernent sont transmises sous forme d'impulsions et sous 12 V dans la ligne 34 en utilisant de nouveau le principe des courants porteurs.

Ces informations en code binaire véhiculées par la ligne 34 par un courant porteur alternatif de 12 V sont alors démodulées dans les étiquettes 4 concernées de la ligne, afin d'exécuter les ordres ainsi reçus et de modifier leur affichage en conséquence.

Lorsque l'affichage est réalisé, une information de contrôle est envoyée en sens inverse dans le dispositif et est à son tour modulée ou démodulée afin d'être transmise sous 12 V dans la ligne 34, et sous 220 V dans la ligne 23, jusqu'à l'ordinateur 1.

Les émissions et réceptions se font à fréquence plus élevée qu'à l'habitude : 262 khz par exemple.

Le dispositif suivant l'invention permet avec des lignes usuelles à 2 fils et avec un nombre réduit d'interfaces secondaires, d'équiper un magasin, même si celui-ci est très important et présente de très nombreux produits, de manière rapide et peu onéreuse.

## Revendications

1. Dispositif d'affichage électronique de données comportant un ordinateur (1), une interface primaire (2), des interfaces secondaires (3) commandant chacune au moins une étiquette d'affichage électronique (4), et où :
- l'interface primaire (2), recevant les données de l'ordinateur, est reliée à toutes les interfaces secondaires (3) par une seule ligne (23) à deux fils véhiculant un courant alternatif d'alimentation sous basse tension, et des informations de commande et de contrôle sous forme d'impulsions,
- chaque interface secondaire (3) est reliée à toutes ses étiquettes (4) par une seule ligne (34) à deux fils véhiculant un courant alternatif d'alimentation sous très basse tension, et des informations de commande et de contrôle sous forme d'impulsions,
- toutes les informations sont transmises en utilisant le principe des courants porteurs.

2. Dispositif selon la revendication 1, caractérisé en ce que la basse tension utilisée dans la ligne (23) reliant l'interface primaire (2) aux interfaces secondaires (3) est de 220 volts.

3. Dispositif selon l'une des revendications 1 ou 2, caractérisé en ce que la très basse tension utilisée dans les lignes (34) reliant chaque interface secondaire (3) à ses étiquettes (4) est de 12 Volts.

## Patentansprüche

1. Vorrichtung zur elektronischen Datenanzeige mit einem elektronischen Rechner (1), einer Primärschnittstelle (2) und mit Sekundärschnittstellen (3), von denen jede wenigstens eine elektronische Anzeigetafel (4) steuert, wobei :
- die die Daten vom Rechner (1) erhaltende Primärschnittstelle (2) mit allen Sekundärschnittstellen (3) über eine einzige Leitung (23) mit zwei Leitern verbunden ist, über die eine Wechselstromversorgung niederer Spannung und Steuer-und Kontrollinformationen in Form von Impulsen übertragen werden,
- jede Sekundärschnittstelle (3) mit allen ihren Anzeigetafeln (4) über eine einzige Leitung (34) mit zwei Leitern verbunden ist, über die eine Wechselstromversorgung sehr niedriger Spannung sowie Steuer-und Kontrollinformationen in Form von Impulsen übertragen werden und wobei,
- alle Informationen unter Benutzung des Prinzips der Trägerstromübertragung weitergeleitet werden.

2. Vorrichtung nach Anspruch 1, dadurch gekennzeichnet, daß die an die Leitung (23), die die Primärschnittstelle (2) mit den Sekundärschnittstellen (3) verbindet, angelegte Spannung 220 Volt beträgt.

3. Vorrichtung nach einem der Anprüche 1 oder 2, dadurch gekennzeichnet, daß die an die Leitung (34), die jede Sekundärschnittstelle (3) mit ihren Anzeigetafeln verbindet, angelegte sehr niedrige Spannung, 12 Volt beträgt.

## Claims

1. An electronic data display device comprising a computer (1), a primary interface (2), secondary interfaces (3) each controlling at last one electronic display label (4), wherein :
- the primary interface (2) receiving data from computer (1), is connected to all the secondary interfaces (3) by a single two-wire line (23) which conveys an alternating feed current at low voltage, and control and check information in the form of pulses,
- each secondary interface (3) is connected to all its labels (4) by a single two-wire line (34) which conveys an alternating feed current at very low voltage, and control and check information in the form of pulses,
- all the information is transmitted using the principle of carrier currents.

2. A device according to Claim 1, characterised in that the low voltage used in the line (23) connecting the primary interface (2) to the secondary interface (3) is 220 volts.

3. A device according to one of Claims 1 or 2, characterised in that the very low voltage used in the lines (34) connecting each secondary interface (3) to its labels (4) is 12 volts.
